Europäisches Patentamt

European Patent Office

Office européen des brevets

(11) Veröffentlichungsnummer: **0 290 715**
**A2**

(12) # EUROPÄISCHE PATENTANMELDUNG

(21) Anmeldenummer: 88100405.5

(22) Anmeldetag: 14.01.88

(51) Int. Cl.⁴: **G05B 5/00 , B60K 31/00**

(30) Priorität: 09.05.87 DE 3715556

(43) Veröffentlichungstag der Anmeldung:
**17.11.88 Patentblatt 88/46**

(84) Benannte Vertragsstaaten:
**DE FR IT SE**

(71) Anmelder: **VDO Adolf Schindling AG**
**Gräfstrasse 103**
**D-6000 Frankfurt/Main(DE)**

(72) Erfinder: **Helmstädter, Gerald**
**Rudolf-Diesel-Strasse 1**
**D-6108 Weiterstadt(DE)**
Erfinder: **Ohm, Heinz-Friedrich**
**Franz-Seliger-Strasse 8**
**D-6108 Weiterstadt(DE)**
Erfinder: **Appel, Heinz-Günter**
**Brahmstrasse 4**
**D-6232 Bad Soden(DE)**
Erfinder: **Probst, Kurt**
**Altkönigstrasse 19**
**D-6231 Schwalbach/Ts.(DE)**

(74) Vertreter: **Klein, Thomas, Dipl.-Ing. (FH)**
**Sodener Strasse 9 Postfach 6140**
**D-6231 Schwalbach a. Ts.(DE)**

(54) Verfahren zur Vermeidung des Überschwingens eines Reglers.

(57) Das Ausschwingen eines Reglers über den einzuhaltenden Sollwert wird dadurch vermieden, daß dem Regler zunächst ein anzulaufender Hilfssollwert zugeordnet wird, der von dem einzuhaltenden Hauptsollwert einen Abstand entsprechend der maximalen Ausschwingamplitude aufweist, wobei nach Erreichen des Hilfssollwertes der Hauptsollwert nach einer Zeitfunktion angefahren wird, die so gewählt ist, daß bei Erreichen des Hauptsollwertes der Regler sich im eingeschwungenen Zustand befindet.

EP 0 290 715 A2

## Verfahren zur Vermeidung des Überschwingens eines Reglers

Die Erfindung bezieht sich auf ein Verfahren zur Vermeidung des Überschwingens eines Reglers, insbesondere eines Geschwindigkeits-oder Drehzahlreglers für Kraftfahrzeuge, über einen vorgegebenen Sollwert hinaus.

Da Regler ein bestimmtes Eigenschwingverhalten aufweisen, ist es bisher nicht zu vermeiden gewesen, daß ein vorgegebener Sollwert bis zum Erreichen des eingeschwungenen Zustandes kurzzeitig überschritten oder unterschritten wird. Dieser Nachteil kann durch den Einsatz eines sehr schnellen Reglers auf ein Minimum begrenzt werden. Diese Regler haben in den meisten Fällen über ihren Regelbereich eine große Änderung je Zeiteinheit der Regelgröße zur Folge, was bei Reglern für Kraftfahrzeuge, wenn beispielsweise die Geschwindigkeit geregelt werden soll, zu großen Beschleunigungsänderungen und damit zu einem nicht konfortablen Fahrverhalten führt. Bei Reglern, die die Drehzahl der Brennkraftmaschine regeln, darf ein unterer Sollwert nicht unterschritten werden, weil dann die Brennkraftmaschine unter die Mindestdrehzahl abfällt und damit ausgeht. Hier könnte man zwar die Mindestdrehzahl anheben, was aber zu einem erhöhten Verbrauch im Leerlaufbereich führt.

Aufgabe der Erfindung ist es, bei einem Regler das Überschwingen über oder unter den gewünschten Sollwert zu vermeiden.

Diese Aufgabe wird durch das im Patentanspruche angegebene Verfahren gelöst.

Durch die Erfindung wird das Überschreiten bzw. Unterschreiten eines vorgegebenen Sollwertes vermieden und damit die Anwendung eines langsamen und damit komfortablen Reglers mit einem großen Eigenschwingverhalten ermöglicht. Bei Verwendung von digitalen Reglern wird kein zusätzlicher Hardwareaufwand bei der Anwendung des Verfahrens erforderlich und die Einstellung der Zeitfunktion ist sehr flexibel.

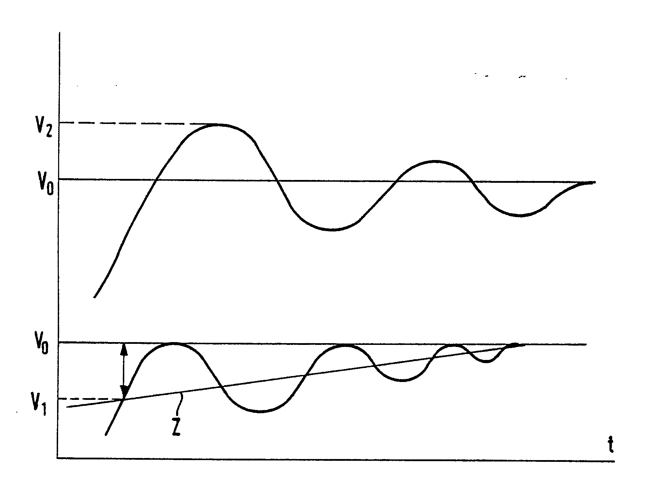

Die Erfindung wird nachstehend anhand eines das Eigenschwingverhalten eines Reglers darstellenden Diagrammes erläutert, das in der einzigen Figur der Zeichnung dargestellt ist.

Im oberen Teil des Diagrammes ist das Eigenschwingverhalten eines Reglers gezeigt, der die Geschwindigkeit $V_0$ einhalten soll. Aufgrund des Eigenschwingverhaltens wird aber eine höhere Geschwindigkeit, die in der Zeichnung mit $V_2$ bezeichnet ist, erreicht.

Um dies zu vermeiden wird gemäß der Erfindung entsprechend der unteren Darstellung dem Regler ein Hilfssollwert, der in der Zeichnung mit $V_1$ bezeichnet ist, zugeordnet, der einen Abstand vom Hauptsollwert $V_0$ aufweist, welcher gerade der Ausschwingamplitude entspricht. Hierdurch wird trotz des Ausschwingens gerade der Hauptsollwert $V_0$ erreicht. Ab diesem Zeitpunkt wird der Regler entsprechend einer Zeitfunktion, die durch die Linie Z dargestellt ist, an den Hauptsollwert herangeführt, wobei diese Zeitfunktion so gewählt ist, daß der Hauptsollwert erst im eingeschwungenen Zustand des Reglers erreicht ist.

## Ansprüche

Verfahren zur Vermeidung des Überschwingens eines Reglers, insbesondere eines Geschwindigkeits-oder Drehzahlreglers für Kraftfahrzeuge, über einen vorgegebenen Sollwert hinaus, dadurch **gekennzeichnet**, daß dem Regler ein zunächst anzulaufender Hilfssollwert zugeordnet wird, der von dem einzuhaltenden Hauptsollwert einen Abstand entsprechend der maximalen Ausschwingamplitude aufweist und daß nach Erreichen des Hilfssollwertes der Hauptsollwert nach einer Zeitfunktion angefahren wird, wobei die Zeitfunktion so gewählt wird, daß bei Erreichen des Hauptsollwerts der Regler sich im eingeschwungenen Zustand befindet.